Europäisches Patentamt

European Patent Office

Office européen des brevets

(19)

(11) Veröffentlichungsnummer : **0 055 425**
**B1**

(12) # EUROPÄISCHE PATENTSCHRIFT

(45) Veröffentlichungstag der Patentschrift :
25.07.84

(21) Anmeldenummer : **81110525.3**

(22) Anmeldetag : **17.12.81**

(51) Int. Cl.³ : **F 16 B 13/12**

(54) Befestigungsvorrichtung für Bauteile an Mauerwerk oder dergleichen.

(30) Priorität : **27.12.80 DE 3049264**

(43) Veröffentlichungstag der Anmeldung :
**07.07.82 Patentblatt 82/27**

(45) Bekanntmachung des Hinweises auf die Patenterteilung : **25.07.84 Patentblatt 84/30**

(84) Benannte Vertragsstaaten :
**AT BE CH DE FR GB IT LI LU NL SE**

(56) Entgegenhaltungen :
**DD-A- 128 619**
**DE-A- 2 138 246**
**DE-U- 7 019 890**

(73) Patentinhaber : **Rockenfeller KG Befestigungselemente**
**Ferndorfstrasse 80**
**D-5912 Hilchenbach 1 (DE)**

(72) Erfinder : **Rockenfeller, Gottfried**
**An der Wilhelmsburg 11**
**D-5912 Hilchenbach (DE)**
Erfinder : **Rockenfeller, geb. Becker, Gisela**
**An der Wilhelmsburg 11**
**D-5912 Hilchenbach (DE)**

(74) Vertreter : **Müller, Gerd et al**
**Patentanwälte F.W. Hemmerich Gerd Müller,
Dipl.-Ing. D. Grosse Felix Pollmeier Hammerstrasse 2
D-5900 Siegen 1 (DE)**

EP 0 055 425 B1

Jouve, 18, rue St-Denis, 75001 Paris, France

**Beschreibung**

Die Erfindung betrifft eine Befestigungsvorrichtung für Bauteile an Mauerwerk oder dergleichen, bestehend aus einem Kunststoff-Spreizdübel und einer in diesen eintreibbaren Nagelschraube mit zur Längsachse flach geneigten vorderen Gewindeflanken und hierzu steil geneigten hinteren Gewindeflanken.

Befestigungsvorrichtungen dieser Art sind bereits seit langem in vielen verschiedenen Ausführungsformen bekannt (siehe z. B. DD-A-128 619).

Die Spreizdübel werden dabei in ein ihrem Durchmesser möglichst eng angepaßtes Bohr- bzw. Stemmloch des Mauerwerks oder dergleichen eingesetzt und dienen zur Sicherung der vorgesehenen Lage des mit Hilfe der Schrauben zu befestigenden Bauteils.

Der Innendurchmesser der Spreizdübel und der jeweils wirksame Durchmesser der zugehörigen Schraube sind bei einer solchen Befestigungsvorrichtung so aufeinander abgestimmt, daß beim Eintreiben der Schraube nicht nur der spreizbare Dübelabschnitt innerhalb des Bohr- oder Stemmloches zur Erzielung einer Verankerungswirkung im Mauerwerk sicher auseinandergetrieben wird, sondern sich gleichzeitig auch eine Verankerung der Schraube in der inneren Dübelwand ergibt, um dem zu sichernden Bauteil den jeweils erforderlichen Halt zu geben.

Die Auszugsfestigkeit solcher Befestigungsvorrichtungen hängt dabei einerseits von der Paßgenauigkeit zwischen dem unverspannten Spreizdübel und dem ihn aufnehmenden Bohr- oder Stemmloch im Mauerwerk oder dergleichen ab und wird andererseits wesentlich durch die Art des Zusammenwirkens der Schraube mit dem Spreizdübel bestimmt.

Bekannt ist es, Befestigungsvorrichtungen zu verwenden, bei denen mit dem Spreizdübel eine Schraube in Wirkverbindung gebracht wird, die als Holzschraube ausgebildet ist oder aber ein Gewinde aufweist, das einem Holzschraubengewinde wenigstens ähnlich ist. Dabei beruht die Wirkungsweise solcher Schrauben darauf, daß sich das scharfkantige und steilflankige Gewinde in die innere Dübelwand einschneidet und damit eine im hohen Maße plastische Verformung des Dübelmaterials herbeiführt, aus der sich die Verankerungswirkung ergibt. Die Praxis hat jedoch gezeigt, daß die Auszugsfestigkeit solcher Befestigungsvorrichtungen, bedingt durch die plastische Veränderung des Dübelmaterials, in vielen Fällen zu wünschen übrig läßt und sich besonders dann eine Verminderung dieser Auszugsfestigkeit einstellt, wenn die Schraube, bspw. aus montagetechnischen Gründen, nach dem Eindrehen nochmals etwas gelockert werden muß, bevor sie endgültig angezogen wird. Nachteilig bei der Verwendung von Holzschrauben oder aber von Schrauben mit holzschraubenähnlichem Gewinde ist auch, daß diese, bedingt durch ihre schneidende Wirkungsweise, einen hohen Eindrehwiderstand aufweisen, welcher besonders dann unangenehm in Erscheinung tritt, wenn Schrauben mit verhältnismäßig langem Gewindeabschnitt verwendet werden.

Zur Vermeidung dieser Nachteile sind bei Befestigungsvorrichtungen der genannten Art auch schon Nagelschrauben zum Einsatz gebracht worden, die sich von Holzschrauben bzw. von Schrauben mit holzschraubenähnlichem Gewinde im wesentlichen dadurch unterscheiden, daß ihre vorderen Gewindeflanken zur Schraubenlängsachse eine flach geneigte Lage haben, während ihre hinteren Gewindeflanken hierzu eine steil geneigte Lage aufweisen.

Vorteilhaft bei solchen Nagelschrauben ist es einerseits, daß sie nicht auf ihrer ganzen Länge eingedreht werden müssen, sondern eingeschlagen werden können und zur Erzielung ihrer endgültigen Auszugswirkung lediglich wenige Drehungen erfordern. Andererseits haben sie, bedingt durch ihre Gewindeform, einen geringen Anzugswiderstand. Sie lassen sich deshalb auch beim Vorhandensein verhältnismäßig langer Gewindeabschnitte zur Erzielung des Endanzugs noch relativ leicht drehen. Schließlich führen sie bei ihrem Eintreiben in den Spreizdübel auch keine plastische, sondern lediglich eine elastische Verformung an der Innenwand des Spreizdübels herbei, so daß die Auszugsfestigkeit der gesamten Befestigungsvorrichtung erhalten bleibt, sofern es nicht notwendig wird, insbesondere aus montagetechnischen Gründen, die Schraube nach ihrem endgültigen Anziehen nochmals etwas zu lockern.

Die maximale Auszugsfestigkeit von Befestigungsvorrichtungen, die mit Nagelschrauben ausgestattet sind, hat sich in der Praxis jedoch als etwas geringer erwiesen, wie sie sich bei Befestigungsschrauben ergibt, die mit Holzschrauben oder aber mit Schrauben ausgestattet sind, welche ein holzschraubenähnliches Gewinde aufweisen.

Bei Befestigungsvorrichtungen mit Nagelschrauben tritt zudem dann noch eine Verminderung der ursprünglichen Auszugsfestigkeit ein, wenn die Nagelschrauben nach ihrem Eintreiben nochmals gänzlich oder aber über einen relativ großen längeren Abschnitt aus dem Spreizdübel herausgedreht werden müssen. Denn in diesem Falle schneiden sich die Gewindegänge, ebenso wie bei Holzschrauben oder aber bei Schrauben mit holzschraubenähnlichem Gewinde, in das Material der inneren Dübelwand ein und führen somit eine plastische Verformung derselben herbei, die die Verankerungswirkung beträchtlich mindert.

Ziel der Erfindung ist es, eine gattungsgemäße Befestigungsvorrichtung zu schaffen, welche die sich bei der Verwendung von Holzschrauben, von Schrauben mit holzschraubenartigem Gewinde oder von Nagelschrauben einstellenden Nachteile nicht aufweist, sondern unter allen praktisch vorkommenden Bedingungen eine optimale Auszugsfestigkeit gewährleistet.

Die Lösung dieser Aufgabe wird im wesentlichen dadurch erreicht, daß bei einer Befestigungsvorrichtung der eingangs genannten Gattung, d. h. bei einer Befestigungsvorrichtung, bestehend aus einem Kunststoff-Spreizdübel und einer in diesen eintreibbaren Nagelschraube mit zur Längsachse flach geneigten vorderen Gewindeflanken und hierzu steil geneigten hinteren Gewindeflanken, die Verbindung zwischen den Flanken aus Gewindekämme bildenden Abrundungen besteht.

Der wesentliche Vorteil einer solchen Befestigungsvorrichtung liegt darin, daß der Schraube sowohl beim Eindrehen als auch beim Einschlagen nur ein geringer Widerstand entgegen wirkt und daß sie unter allen Bedingungen nur elastische Verformungen an der Innenwand des Spreizdübels herbeiführt. Da das Dübelmaterial sich infolge seines voll erhalten bleibenden elastischen Verhaltens nach dem Eintreiben der Schraube jeweils in die Gewindegänge bis zum Schraubenkern hin ausdehnt, ergibt sich eine optimale Verklammerungswirkung zwischen dem Dübelmaterial und den steil geneigten hinteren Gewindeflanken der Schraube. Und zwar erweist sich diese Verklammerungswirkung überraschenderweise dann als besonders gut, wenn die Nagelschraube zunächst über den größten Teil ihrer Länge in den Spreizdübel eingeschlagen und nur zur Erzielung des Endanzuges etwas nachgedreht wird. Praktische Versuche haben ergeben, daß sich hierbei die Auszugsfestigkeit der gesamten Befestigungsvorrichtung etwa um den Faktor 1,3 erhöht.

Im Gegensatz hierzu vermindert sich bei Befestigungsvorrichtungen, die mit Holzschrauben oder aber mit Schrauben ausgestattet sind, die holzschraubenähnliches Gewinde aufweisen, die Auszugsfestigkeit mit dem Erreichen des wünschenswerten Endanzuges gegenüber dem kurz vorher erzielten Wert mindestens um einen Faktor von 0,2, also auf 0,8.

Bei Befestigungsvorrichtungen, die mit herkömmlichen Nagelschrauben ausgestattet sind, verändert sich zwar mit der Herbeiführung des Endanzugs die vorher erreichte Auszugsfestigkeit nicht, jedoch liegt diese effektiv bei demjenigen Wert, welcher sich unter Verwendung von Holzschrauben nach Durchführung des Endanzugs einstellt.

Mit einer Befestigungsvorrichtung der erfindungsgemäßen Art sind also im Endzustand Auszugsfestigkeiten erreichbar, die etwa um den Faktor 0,5 höher liegen als sie mit Hilfe der vorstehend beschriebenen bekannten Befestigungsvorrichtungen herbeigeführt werden können.

Erfindungsgemäß hat es sich besonders bewährt, wenn die flach geneigten Gewindeflanken der Nagelschraube nicht gerade verlaufen, sondern eine konvex gewölbte Kontur aufweisen.

Als wichtig kann es sich nach der Erfindung ferner erweisen, wenn der Radius der Abrundungen an den Gewindekämmen wenigstens der halben Gewindetiefe entspricht und wenn der Wölbungsradius der flach geneigten Gewindeflanken mindestens gleich dem halben Schraubendurchmesser ist.

Schließlich kann es sich in manchen Fällen aber auch als zweckmäßig erweisen, wenn die Nagelschraube derart ausgebildet ist, daß sich die Außendurchmesser der spitzennahen Gewindegänge, mindestens zweier Gewindegänge, zur Schraubenspitze hin verringern.

Weitere Merkmale und Vorteile einer erfindungsgemäßen Befestigungsvorrichtung werden nachfolgend anhand in der Zeichnung dargestellter Ausführungsbeispiele erläutert.

Es zeigen:

Figur 1 in Seitenansicht eine Nagelschraube und im Längsschnitt einen zugehörigen Spreizdübel einer Befestigungsvorrichtung in unmontiertem Zustand,

Figur 2 in größerem Maßstab einen Längsschnitt durch die Nagelschraube nach Fig. 1 im Bereich II,

Figur 3 ebenfalls in größerem Maßstab einen Längsschnitt durch die Spitze einer Nagelschraube in abgewandelter Ausführung und

Figur 4 einen Längenabschnitt eines in ein Bohr- oder Stemmloch von Mauerwerk eingesetzten Dübels mit eingedrehter Schraube im Längsschnitt.

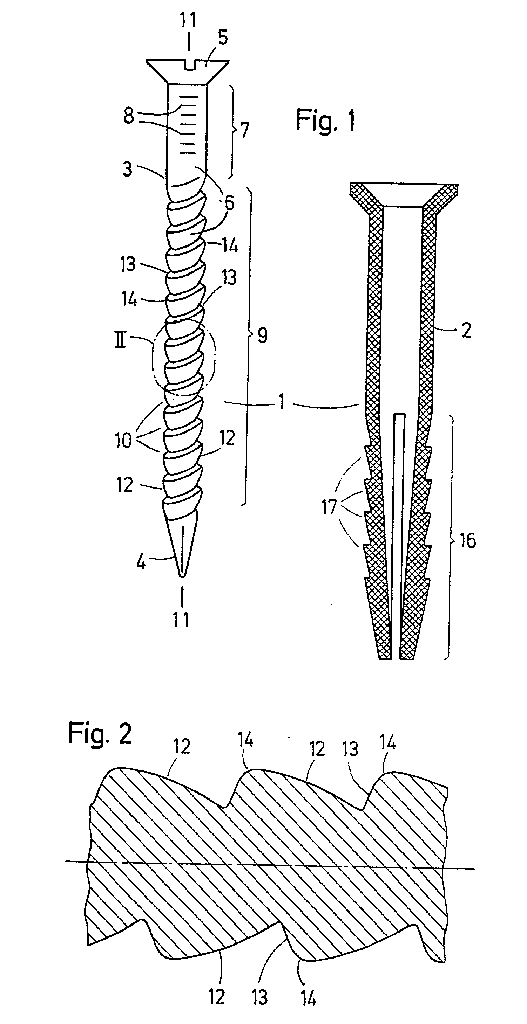

In Fig. 1 ist eine Befestigungsvorrichtung 1 für Bauteile an Mauerwerk oder dergleichen dargestellt, die aus einem Kunststoff-Spreizdübel 2 und einer in diesen eintreibbaren Nagelschraube 3 besteht. An ihrem einen Ende hat die Nagelschraube 3 eine mehrkantige, steil-pyramidenförmige Spitze 4, während ihr gegenüberliegendes Ende einen Senkkopf 5 aufweist. Der Schraubenschaft 6 ist über ein sich an den Senkkopf 5 anschließendes Teilstück 7 zylindrisch ausgeführt und gegebenenfalls mit Querriefen 8 ausgestattet. Das längere Teilstück 9 des Schraubenschaftes 6 ist bis zur Spitze 4 hin mit Gewinde 10 versehen. Dieses Gewinde 10 weist jeweils zur Längsachse 11 der Schraube 3 flach geneigte vordere Gewindeflanken 12 auf, während es andererseits gegen die Längsachse 11 der Schraube 3 steil geneigte hintere Gewindeflanken 13 hat.

Die beiden Gewindeflanken 12 und 13 treffen in Gewindekämmen aufeinander, welche aus verhältnismäßig starken Abrundungen 14 bestehen. Der Radius dieser Abrundungen 14 ist dabei so gewählt, daß er wenigstens der halben Gewindetiefe entspricht. Die flach geneigten Gewindeflanken 12 haben eine konvex gewölbte Kontur, wobei der Wölbungsradius derselben mindestens dem halben Schraubendurchmesser entspricht, vorzugsweise aber gleich diesem Schraubendurchmesser ist.

Die Gewindekontur der Nagelschraube 3 ist besonders deutlich den Fig. 2 bis 4 zu entnehmen.

Beim Eintreiben der Nagelschraube 3 in den Spreizdübel 2 drückt diese den geschlitzten Teilabschnitt 16 desselben radial auseinander, so daß dieser sich in dem Bohr- oder Stemmloch des Mauerwerks 18 oder dergleichen mit seinen konischen Umfangsabstufungen 17 verspannt und festkrallt.

Beim Eintreiben der Nagelschraube 3 in den Spreizdübel 2 wird dabei im Bereich des geschlitzten Teilabschnitts 16 das Material der Dübelwandung zunächst unter elastischer Verformung radial nach außen verdrängt. Anschließend fließt aber das Dübelmaterial wieder in die Vertiefungen des Gewindes zurück und füllt diese bis zum Schraubenkern hin aus.

Da das Gewinde 10 durch keinerlei scharfe Kanten begrenzt ist und, insbesondere im Bereich seiner Kämme, starke Abrundungen 14 hat, wird ein Einschneiden desselben in das Dübelmaterial vermieden und damit eine bleibende plastische Verformung desselben verhindert. Hieraus resultiert nicht nur eine erhöhte radiale Verspannung des Dübels innerhalb des Bohr- oder Stemmloches des Mauerwerks 18, sondern es wird auch die Verankerung der Nagelschraube 3 innerhalb des Dübels wesentlich verbessert. Die Folge hiervon ist eine beträchtlich verbesserte Auszugsfestigkeit der gesamten Befestigungsvorrichtung 1 im Mauerwerk 18.

Die optimale Auszugsfestigkeit der Befestigungsvorrichtung 1 im Mauerwerk 18 oder dergleichen ist dann erreichbar, wenn die Nagelschraube 3 zunächst über den größten Teil ihrer Länge in den Spreizdübel 2 eingeschlagen und dann zur Erreichung des Endanzugs nachgedreht wird. Praktische Versuche haben gezeigt, daß sich dieser Endanzug schon mit einer einzigen Schraubendrehung erreichten läßt und dabei die Auszugsfestigkeit der gesamten Befestigungsvorrichtung 1 noch um ein beträchtliches Maß ansteigt.

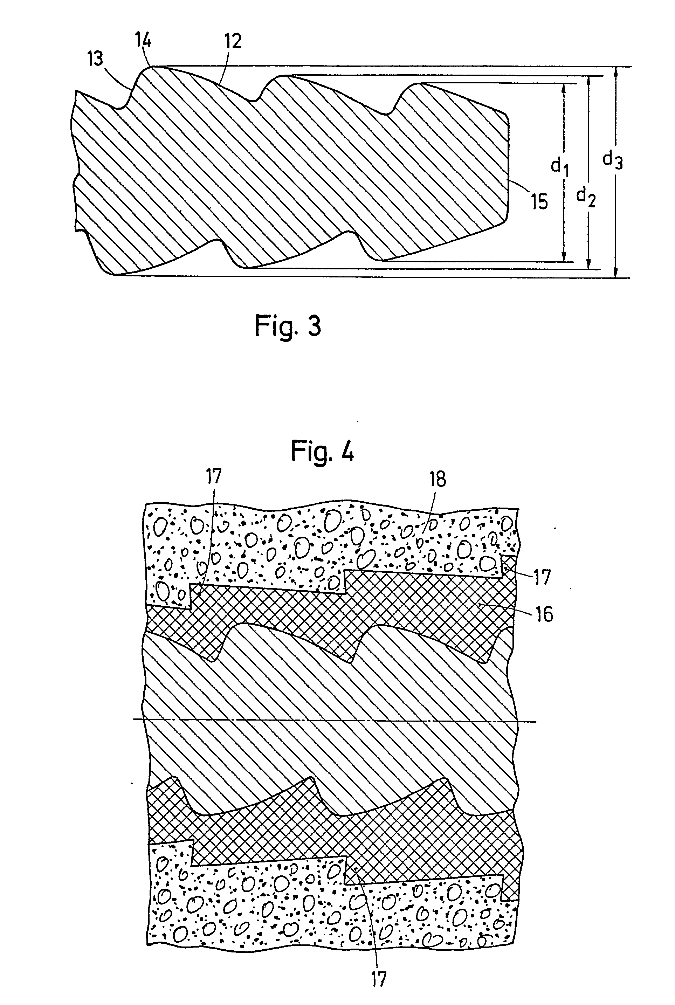

Um das Eintreiben der Nagelschraube 3 zu erleichtern, kann der Außendurchmesser der von der Schraubenspitze her gesehen ersten Gewindegänge gegenüber dem der übrigen Gewindegänge etwas verringert sein ($d_1 < d_2 < d_3$, vgl. Fig. 3) und zwar derart, daß sich eine Verjüngung des Gewindes zur Spitze 15 hin ergibt. Überraschenderweise hat sich gezeigt, daß durch diese Maßnahme die Auszugswerte der erfindungsgemäßen Nagelschraube nach dem Nachdrehen noch eine weitere Steigerung erfahren.

Anstelle der steil pyramidenförmigen Spitze 4 (vgl. Fig. 1) kann die Nagelschraube 3 auch mit einer abgestumpften Spitze 15 (vgl. Fig. 3) ausgerüstet sein.

Bei einer durchgeführten Versuchsreihe werden Nagelschrauben 3 mit einem Durchmesser von 4,8 mm 60 mm tief in Spreizdübel 2 eingeschlagen, dei in Bohrlöcher von Mauersteinen eingesetzt waren. Hiernach wurde eine mittlere Auszugsfestigkeit der gesamten Befestigungsvorrichtung 1 von 3 400 N gemessen.

Wurden im Anschluß an das Einschlagen die Nagelschrauben 3 zur Erzielung ihres Endanzuges etwas nachgedreht, dann stieg die Auszugsfestigkeit der gesamten Befestigungsvorrichtung auf einen mittleren Wert von 4 333 N, erhöhte sich also um den Faktor 1,27. Bei Nagelschrauben gleicher Abmessungen, jedoch mit Verjüngung der Gewindegänge zur Spitze hin (Fig. 3) wurde nach dem Endanzug eine Auszugsfestigkeit von ca. 5 000 N festgestellt.

Unter den gleichen Bedingungen durchgeführte Vergleichsversuche unter Verwendung von Holzschrauben mit 5 mm Durchmesser ergaben folgende Mittelwerte:

Eindrehen der Holzschrauben in die Spreizdübel auf 60 mm Länge = 4 433 N Mittelwert.

Nachdrehen der Schrauben zur Erzielung der Endverspannung = 3 500 N.

Nach Erreichen der Endverspannung sank also die Auszugsfestigkeit der gesamten Befestigungsvorrichtung auf den Faktor 0,789 ab.

Ein entsprechender Vergleichsversuch unter Verwendung von üblichen Nagelschrauben führte zu folgenden Mittelwerten:

Einschlagen der Nagelschrauben in den Dübel auf 60 mm Länge = 3 533 N.

Nachdrehen der Nagelschrauben zur Erzielung der Endverspannung = 3 533 N.

Die Auszugsfestigkeit der gesamten Befestigungsvorrichtung 1 blieb also die gleiche.

Auch diese Vergleichsversuche machen deutlich, daß die effektive Auszugsfestigkeit von Befestigungsvorrichtungen 1 unter Verwendung von Nagelschrauben der vorstehend beschriebenen besonderen Art um den Faktor 1,5 höher liegt als bei den Befestigungsvorrichtungen mit anderen vergleichbaren Schraubenausführungen.

Die Erhöhung der Auszugsfestigkeit für die Befestigungsvorrichtungen ist dabei offenbar auf die besondere Ausgestaltung des Gewindes 10 der Nagelschrauben 3 zurückzuführen, welches sich durch die mit starken Abrundungen 14 versehenen Gewindekämme auszeichnet und außerdem an den flach geneigten Gewindeflanken 12 eine konvex gewölbte Kontur hat.

Als besonders vorteilhaft hat sich bei den Befestigungsvorrichtungen 1 bei Verwendung der Nagelschrauben 3 auch noch gezeigt, daß die optimale Auszugsfestigkeit auch dann erhalten bleibt, wenn die Nagelschraube 3 völlig aus den Dübeln 2 herausgedreht und anschließend wieder in diese in der vorstehend beschriebenen Weise eingebracht wurde. Dieser vorteilhafte Effekt resultiert offenbar aus der Tatsache, daß durch die Nagelschraube 3 keine plastischen, sondern lediglich elastische Verformungen des Dübelmaterials hervorgerufen werden, so daß dieses immer wieder in die Gewindegänge bis zum Gewindeschaft zurückfließt und diese ausfüllt. Damit bleibt der optimale Verankerungseffekt zwischen den Nagelschrauben 3 und dem Dübel dauerhaft erhalten.

**Ansprüche**

1. Befestigungsvorrichtung für Bauteile an Mauerwerk oder dergleichen, bestehend aus einem Kunststoff- Spreizdübel (2) und einer in diesen eintreibbaren Nagelschraube (3) mit zur Längsachse (11) flach geneigten vorderen Gewindeflanken (12) und hierzu steil geneigten hinteren Gewindeflanken (13), dadurch gekennzeichnet, daß die Verbindung zwischen den Flanken (12 und 13) aus Gewindekämme bildenden Abrundungen (14) besteht.

2. Befestigungsvorrichtung nach Anspruch 1, dadurch gekennzeichnet, daß die flach geneigten Gewindeflanken (12) eine konvex gewölbte Kontur aufweisen.

3. Befestigungsvorrichtung nach Anspruch 1, dadurch gekennzeichnet, daß der Radius der Abrundungen (14) wenigstens der halben Gewindetiefe entspricht.

4. Befestigungsvorrichtung nach mindestens einem der Ansprüche 1 bis 3, dadurch gekennzeichnet, daß der Wölbungsradius der flach geneigten Gewindeflanken (12) mindestens dem halben Schraubendurchmesser entspricht.

5. Befestigungsvorrichtung nach mindestens einem der Ansprüche 1 bis 4, dadurch gekennzeichnet, daß sich die Außendurchmesser der spitzennahen Gewindegänge, mindestens zweier Gewindegänge, zur Schraubenspitze hin verringern.

## Claims

1. A fastener for structural parts of masonry or the like, consisting of a plastics expanding wallplug (2) and a drive-screw (3) which can be driven into it and which at the front of the thread has flanks (12) having a shallow slope with respect to the longitudinal axis (11) and at the rear of the thread flanks (13) having a steep slope with respect to the longitudinal axis (11), characterized in that the connection between the flanks (12 and 13) consists of rounded portions (14) which form crests on the thread.

2. A fastener as in Claim 1, characterized in that the flanks (12) of the thread having a shallow slope exhibit a convexly arched contour.

3. A fastener as in Claim 1, characterized in that the radius of the rounded portions (14) corresponds with at least half the depth of thread.

4. A fastener as in at least one of the Claims 1 to 3, characterized in that the radius of arch of the flanks (12) of the thread having a shallow slope corresponds with at least half the diameter of the screw.

5. A fastener as in at least one of the Claims 1 to 4, characterized in that the outer diameters of the turns of thread near the tip are reduced over at least two turns of thread towards the tip of the screw.

## Revendications

1. Dispositif de fixation d'éléments de construction dans une maçonnerie ou analogue, composé d'une cheville d'expansion (2) en matière plastique et d'une vis-clou (3) qui peut être enfoncée dans cette cheville et comporte des flancs de filetage avant (12) peu inclinés sur l'axe longitudinal (11) et des flancs de filetage arrière (13) fortement inclinés sur cet axe, caractérisé en ce que la liaison entre les flancs (12 et 13) se compose d'arrondis (14) formant des crêtes de filetage.

2. Dispositif de fixation selon la revendication 1, caractérisé en ce que les flancs de filetage peu inclinés (12) présentent un contour convexe.

3. Dispositif de fixation selon la revendication 1, caractérisé en ce que le rayon des arrondis (14) correspond au moins à la demi-profondeur du filetage.

4. Dispositif de fixation selon au moins l'une des revendications 1 à 3, caractérisé en ce que le rayon du bombé des flancs de filetage peu inclinés (12) correspond au moins au demi-diamètre de la vis.

5. Dispositif de fixation selon au moins l'une des revendications 1 à 4, caractérisé en ce que le diamètre extérieur des filets proches de la pointe va en diminuant, au moins pour deux d'entre eux, en direction de la pointe de la vis.

**0 055 425**

Fig. 1

Fig. 2

Fig. 3

Fig. 4